# EUROPEAN PATENT SPECIFICATION

(11) **EP 4 088 600 B1**
(45) Date of publication and mention of the grant of the patent: **18.06.2025**
(21) Application number: 22726376.1
(22) Date of filing: 15.03.2022
(51) Int. Cl.: A24F 40/50, A24F 40/57, A24F 40/20, A24F 40/51

(54) **AEROSOL-GENERATION APPARATUS FOR DETERMINING WHETHER AEROSOL-GENERATION ARTICLE IS OVER-HUMIDIFIED**
AEROSOLERZEUGUNGSVORRICHTUNG ZUR BESTIMMUNG, OB EIN AEROSOLERZEUGUNGSARTIKEL ÜBERFEUCHTET IST
APPAREIL DE GÉNÉRATION D'AÉROSOL POUR DÉTERMINER SI UN ARTICLE DE GÉNÉRATION D'AÉROSOL EST SURHUMIDIFIÉ

(30) Priority: 01.04.2021 KR 20210042819
(43) Date of publication of application: 16.11.2022
(73) Proprietor: KT&G Corporation, Daedeok-gu Daejeon 34337 (KR)
(72) Inventor: SEO, Jangwon, Daejeon 34128 (KR); JUNG, Jin Chul, Daejeon 34128 (KR); GO, Gyoung Min, Daejeon 34128 (KR); BAE, Hyung Jin, Daejeon 34128 (KR); JANG, Chul Ho, Daejeon 34128 (KR); JEONG, Minseok, Daejeon 34128 (KR); JEONG, Jong Seong, Daejeon 34128 (KR)
(74) Representative: Ter Meer Steinmeister & Partner
(86) International application number: PCT/KR2022/003577
(87) International publication number: WO 2022/211313

(56) References cited:
- WO-A1-2020/064347
- WO-A1-2020/165450
- KR-A- 20160 119 777
- KR-A- 20200 005 160
- KR-A- 20200 083 440
- KR-A- 20200 119 713
- US-A1- 2011 265 806
- US-A1- 2020 138 108

## Description

### TECHNICAL FIELD

The present disclosure relates to an aerosol generating device for determining whether an aerosol generating article is over-humidified.

### BACKGROUND ART

Recently, the demand for alternative methods to overcome the disadvantages of traditional aerosol generating articles has increased. For example, there is a growing demand for an aerosol generating device which generates an aerosol by heating an aerosol generating material in an aerosol generating article, rather than by burning an aerosol generating article. Accordingly, researches on a heating-type aerosol generating article or a heating-type aerosol generating device have been actively conducted.

When an over-humidified aerosol generating article is heated, a high temperature aerosol may be generated, and if a user inhales a high-temperature aerosol, the user may feel discomfort. In this regard, because the over-humidified aerosol generating article and the aerosol generating article in a regular state need to be distinguished from each other, an aerosol generating device capable of determining whether the aerosol generating article is over-humidified has been required.
US 2020/138108 A1 relates to an electrically operated aerosol-generating system configured to detect adverse conditions (e.g., a dry heater). The system may comprise an electric heater comprising at least one heating element for heating an aerosol-forming substrate, a power supply, and electric circuitry connected to the electric heater and to the power supply and comprising a memory. The electric circuitry may be configured to measure an initial electrical resistance (R1) of the electric heater; measure a subsequent electrical resistance of the electric heater after the measurement of the initial electrical resistance; determine the difference (ΔR) between the initial electrical resistance and the subsequent electrical resistance; determine that an adverse condition is present if the difference is greater than a maximum threshold value (ΔRmax) or less than a minimum threshold value (ΔRmin) stored in the memory; and control a power to the electric heater and/or provide an indication if the adverse condition is present.

### DESCRIPTION OF EMBODIMENTS

### TECHNICAL PROBLEM

Various embodiments according to the disclosure provide an aerosol generating device capable of determining whether an aerosol generating article is over-humidified.

If a separate humidity sensor is provided to determine whether the aerosol generating article is over-humidified, in order for each sensor to properly perform a function, constraints to be considered when designing the aerosol generating device may increase, and thus, miniaturization of the aerosol generating device may become difficult.

Therefore, the present disclosure provides an aerosol generating device capable of determining whether an aerosol generating article is over-humidified without including a separate humidity sensor for determining whether the aerosol generating article is over-humidified, by using a temperature sensor.

Further, even when a humidity sensor is included in the aerosol generating device, a middle part of the aerosol generating article may be surrounded by a wrapper, thereby making it difficult to accurately measure the humidity of the middle part. Accordingly, the present disclosure provides an aerosol generating device capable of accurately determining whether the aerosol generating article is over-humidified by including a temperature sensor using a heat capacity of the aerosol generating article.

The technical problem to be solved by the present embodiment is not limited to the technical problem described above, and other technical problems may be inferred from the following embodiments.

### SOLUTION TO PROBLEM

The present disclosure provides an aerosol generating device including: a heater configured to heat an aerosol to generate an aerosol generating article; a battery configured to supply power to the heater; a temperature sensor configured to measure a temperature of the heater; and a controller configured to control power supplied to the heater from the battery to: increase a temperature of the heater to reach a first temperature; obtain an inclination indicating an amount of change in the temperature of the heater with respect to time during a preset time period from a time when the temperature of the heater is expected to reach the first temperature; and determine whether the aerosol generating article is over-humidified based on the obtained inclination.

### ADVANTAGEOUS EFFECTS OF DISCLOSURE

The present disclosure provides an aerosol generating device for determining whether an aerosol generating article is over-humidified.

In particular, the aerosol generating device according to the present disclosure may determine whether the aerosol generating article is over-humidified based on an inclination indicating an amount of change in a temperature of a heater measured by a temperature sensor. The temperature sensor is required for controlling the heater according to a preset temperature profile. By using an inclination during a preset time period from a time when the temperature of the heater is expected to reach a first temperature, whether the aerosol generating article is over-humidified may be accurately determined by using the temperature sensor without any additional sensors.

If the aerosol generating article is determined to be over-humidified, the temperature of the heater may be heated to a temperature less than the temperature to heat the heater when it is determined that the aerosol generating article is in a regular state.

Accordingly, even if the aerosol generating article determined to be over-humidified is heated, the user may be prevented from inhaling high-temperature aerosols.

Further, because it may be determined whether the aerosol generating article is over-humidified by using the temperature sensor for measuring the temperature of the heater, a separate humidity sensor for determining whether the aerosol generating article is over-humidified does not need to be provided, and because a single sensor is used, miniaturization of the aerosol generating device may be possible.

Effects of the disclosure are not limited to the above description, and more various effects are included in the present specification.

### BRIEF DESCRIPTION OF DRAWINGS

FIGS. 1 through 3 are views showing examples of inserting an aerosol generating article into an aerosol generating device.
FIG. 4 illustrates an example of the aerosol generating article.
FIG. 5 illustrates a configuration of an aerosol generating device according to an embodiment.
FIG. 6 is a graph for explaining a method of obtaining an inclination according to an embodiment.
FIG. 7 is a flowchart for explaining a method of determining whether the aerosol generating article according to an embodiment is over-humidified.
FIG. 8 is a graph showing a temperature to which a heater is heated according to the over-humidified state of the aerosol generating article according to an embodiment.
FIG. 9 is a flowchart of a method of operating an aerosol generating device according to an embodiment.

### BEST MODE

An aerosol generating device of the present disclosure may include the embodiments below.

According to an embodiment, an aerosol generating device may include: a heater configured to heat an aerosol generating article to generate an aerosol; a battery configured to supply power to the heater; a temperature sensor configured to measure a temperature of the heater; and a controller configured to control power supplied to the heater from the battery to: increase a temperature of the heater to reach a first temperature; obtain an inclination indicating an amount of change in the temperature of the heater with respect to time during a preset time period from a time when the temperature of the heater is expected to reach the first temperature; and determine whether the aerosol generating article is over-humidified based on the obtained inclination.

According to an embodiment, the controller may be further configured to determine that the aerosol generating article is in a regular state when the obtained inclination is less than a first value, and determine that the aerosol generating article is over-humidified when the obtained inclination is greater than or equal to the first value.

According to an embodiment, the controller may be further configured to determine that the aerosol generating article is over-humidified when a middle part included in the aerosol generating article includes about 15 wt% or more of moisture based on the weight of the middle part.

According to an embodiment, when it is determined that the aerosol generating article is in a regular state, the controller may be further configured to increase the temperature of the heater to a second temperature greater than the first temperature.

According to an embodiment, when it is determined that the aerosol generating article is over-humidified, the temperature of the heater may be heated to a third temperature less than the first temperature to change the aerosol generating article to a regular state.

According to an embodiment, after the temperature of the heater is heated to the third temperature, the controller may be further configured to increase the temperature of the heater to a second temperature greater than the first temperature.

According to an embodiment, a time when the temperature of the heater is expected to reach the first temperature may be within a range of about 20 seconds to about 40 seconds from a time when the heater starts to be heated.

According to an embodiment, the controller may further include a timer configured to measure a time when the heater is heated, and may further be configured to obtain the temperature of the heater when the time measured by the timer corresponds to the time when the temperature of the heater is expected to reach the first temperature.

According to an embodiment, the controller may be further configured to obtain the temperature of the heater when the time measured by the timer corresponds to the end of the preset time period, and obtain the inclination based on the temperature of the heater when the temperature of the heater is expected to reach the first temperature, the temperature of the heater at the end of the preset time period, and a length of the preset time period.

According to an embodiment, the first value may be in a range of about 0.2 °C/ second to about 1 °C/ second.

According to an embodiment, the first temperature may be in a range of about 150 °C to about 240 °C.

According to an embodiment, the second temperature may be in a range of about 241 °C to about 270 °C.

According to an embodiment, the third temperature be in a range of about 150 °C to about 200 °C.

### MODE OF DISCLOSURE

With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

Hereinafter, the present disclosure will now be described more fully with reference to the accompanying drawings, in which exemplary embodiments of the present disclosure are shown such that one of ordinary skill in the art may easily work the present disclosure. The disclosure may, however, be embodied in many different forms and should not be construed as being limited to the embodiments set forth herein.

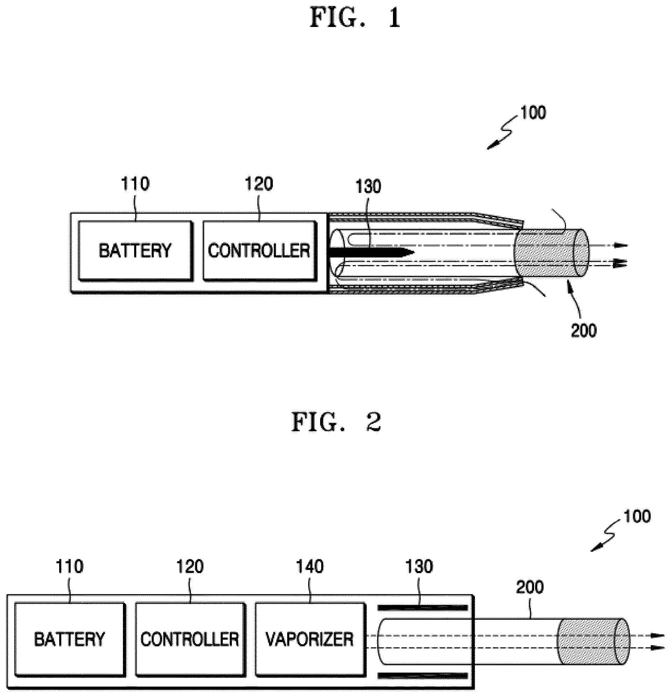

Hereinafter, embodiments of the present disclosure will be described in detail with reference to the drawings. FIGS. 1 through 3 are diagrams showing examples in which an aerosol generating article is inserted into an aerosol generating device.

Referring to FIG. 1, the aerosol generating device 100 may include a battery 110, a controller 120, and a heater 130.

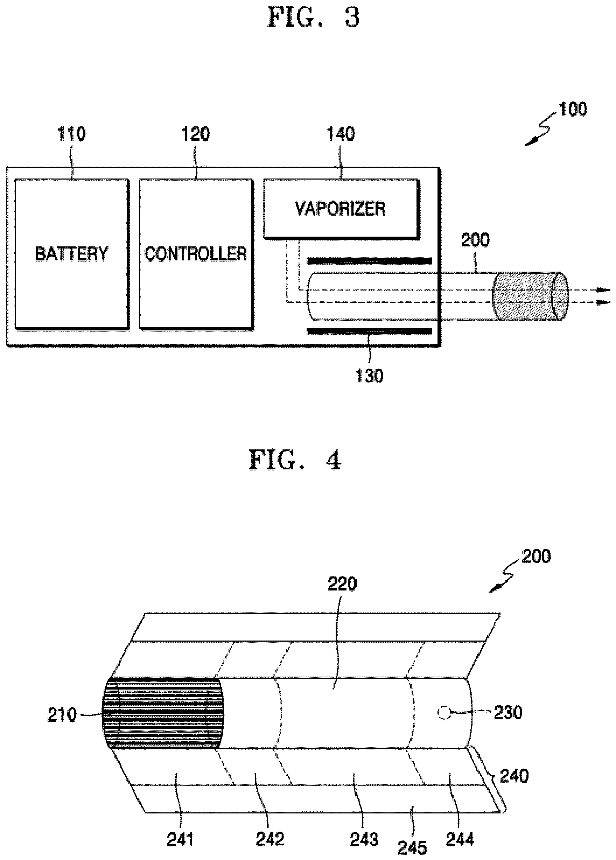

Referring to FIGS. 2 and 3, the aerosol generating device 100 may further include a vaporizer 140.

Also, the aerosol generating article 200 may be inserted into an inner space of the aerosol generating device 100.

FIGS. 1 through 3 illustrate components of the aerosol generating device 100, which are related to the present embodiment. Therefore, it will be understood by one of ordinary skill in the art related to the present embodiment that other general-purpose components may be further included in the aerosol generating device 100, in addition to the components illustrated in FIGS. 1 through 3.

Also, FIGS. 2 and 3 illustrate that the aerosol generating device 100 includes the heater 130. However, as necessary, the heater 130 may be omitted. FIG. 1 illustrates that the battery 110, the controller 120, and the heater 130 are arranged in series.

Also, FIG. 2 illustrates that the battery 110, the controller 120, the vaporizer 140, and the heater 130 are arranged in series.

Also, FIG. 3 illustrates that the vaporizer 140 and the heater 130 are arranged in parallel. However, the internal structure of the aerosol generating device 100 is not limited to the structures illustrated in FIGS. 1 through 3. In other words, according to the design of the aerosol generating device 100, the battery 110, the controller 120, the heater 130, and the vaporizer 140 may be differently arranged. When the aerosol generating article 200 is inserted into the aerosol generating device 100, the aerosol generating device 100 may operate the heater 130 and/or the vaporizer 140 to generate aerosol from the aerosol generating article 200 and/or the vaporizer 140. The aerosol generated by the heater 130 and/or the vaporizer 140 is delivered to a user by passing through the aerosol generating article 200.

As necessary, even when the aerosol generating article 200 is not inserted into the aerosol generating device 100, the aerosol generating device 100 may heat the heater 130. The battery 110 may supply power to be used for the aerosol generating device 100 to operate.

For example, the battery 110 may supply power to heat the heater 130 or the vaporizer 140, and may supply power for operating the controller 120.

Also, the battery 110 may supply power for operations of a display, a sensor, a motor, etc. mounted in the aerosol generating device 100. The controller 120 may generally control operations of the aerosol generating device 100. In detail, the controller 120 may control not only operations of the battery 110, the heater 130, and the vaporizer 140, but also operations of other components included in the aerosol generating device 100.

Also, the controller 120 may check a state of each of the components of the aerosol generating device 100 to determine whether or not the aerosol generating device 100 is able to operate. The controller 120 may include at least one processor. A processor can be implemented as an array of a plurality of logic gates or can be implemented as a combination of a general-purpose microprocessor and a memory in which a program executable in the microprocessor is stored.

It will be understood by one of ordinary skill in the art that the processor can be implemented in other forms of hardware. The heater 130 may be heated by the power supplied from the battery 110. For example, when the aerosol generating article 200 is inserted into the aerosol generating device 100, the heater 130 may be located outside the aerosol generating article 200.

Thus, the heated heater 130 may increase a temperature of an aerosol generating material in the aerosol generating article 200. The heater 130 may include an electro-resistive heater. For example, the heater 130 may include an electrically conductive track, and the heater 130 may be heated when currents flow through the electrically conductive track.

However, the heater 130 is not limited to the example described above and may include all heaters which may be heated to a desired temperature. Here, the desired temperature may be pre-set in the aerosol generating device 100 or may be set by a user. As another example, the heater 130 may include an induction heater. In detail, the heater 130 may include an electrically conductive coil for heating an aerosol generating article in an induction heating method, and the aerosol generating article may include a susceptor which may be heated by the induction heater.

For example, the heater 130 may include a tube-type heating element, a plate-type heating element, a needle-type heating element, or a rod-type heating element, and may heat the inside or the outside of the aerosol generating article 200, according to the shape of the heating element. Also, the aerosol generating device 100 may include a plurality of heaters 130.

Here, the plurality of heaters 130 may be inserted into the aerosol generating article 200 or may be arranged outside the aerosol generating article 200.

Also, some of the plurality of heaters 130 may be inserted into the aerosol generating article 200 and the others may be arranged outside the aerosol generating article 200. In addition, the shape of the heater 130 is not limited to the shapes illustrated in FIGS. 1 through 3 and may include various shapes. The vaporizer 140 may generate aerosol by heating a liquid composition and the generated aerosol may pass through the aerosol generating article 200 to be delivered to a user. In other words, the aerosol generated via the vaporizer 140 may move along an air flow passage of the aerosol generating device 100 and the air flow passage may be configured such that the aerosol generated via the vaporizer 140 passes through the aerosol generating article 200 to be delivered to the user.

For example, the vaporizer 140 may include a liquid storage, a liquid delivery element, and a heating element, but it is not limited thereto. For example, the liquid storage, the liquid delivery element, and the heating element may be included in the aerosol generating device 100 as independent modules.

The liquid storage may store a liquid composition. For example, the liquid composition may be a liquid including a tobacco-containing material having a volatile tobacco flavor component, or a liquid including a non-tobacco material.

The liquid storage may be formed to be detachable from the vaporizer 140 or may be formed integrally with the vaporizer 140. For example, the liquid composition may include water, a solvent, ethanol, plant extract, spices, flavorings, or a vitamin mixture. The spices may include menthol, peppermint, spearmint oil, and various fruit-flavored ingredients, but are not limited thereto.

The flavorings may include ingredients capable of providing various flavors or tastes to a user. Vitamin mixtures may be a mixture of at least one of vitamin A, vitamin B, vitamin C, and vitamin E, but are not limited thereto. Also, the liquid composition may include an aerosol forming substance, such as glycerin and propylene glycol. The liquid delivery element may deliver the liquid composition of the liquid storage to the heating element. For example, the liquid delivery element may be a wick such as cotton fiber, ceramic fiber, glass fiber, or porous ceramic, but is not limited thereto.

The heating element is an element for heating the liquid composition delivered by the liquid delivery element. For example, the heating element may be a metal heating wire, a metal hot plate, a ceramic heater, or the like, but is not limited thereto.

In addition, the heating element may include a conductive filament such as nichrome wire and may be positioned as being wound around the liquid delivery element. The heating element may be heated by a current supply and may transfer heat to the liquid composition in contact with the heating element, thereby heating the liquid composition. As a result, aerosol may be generated. For example, the vaporizer 140 may be referred to as a cartomizer or an atomizer, but it is not limited thereto. The aerosol generating device 100 may further include general-purpose components in addition to the battery 110, the controller 120, the heater 130, and the vaporizer 140.

For example, the aerosol generating device 100 may include a display capable of outputting visual information and/or a motor for outputting haptic information.

Also, the aerosol generating device 100 may include at least one sensor (a puff sensor, a temperature sensor, an aerosol generating article insertion detecting sensor, etc.). Also, the aerosol generating device 100 may be formed as a structure that, even when the aerosol generating article 200 is inserted into the aerosol generating device 100, may introduce external air or discharge internal air. Although not illustrated in FIGS. 1 through 3, the aerosol generating device 100 and an additional cradle may form together a system. For example, the cradle may be used to charge the battery 110 of the aerosol generating device 100.

Alternatively, the heater 130 may be heated when the cradle and the aerosol generating device 100 are coupled to each other. The aerosol generating article 200 may be similar to a general combustive cigarette. For example, the aerosol generating article 200 may be divided into a first portion including an aerosol generating material and a second portion including a filter, etc.

Alternatively, the second portion of the aerosol generating article 200 may also include an aerosol generating material. For example, an aerosol generating material made in the form of granules or capsules may be inserted into the second portion. The entire first portion may be inserted into the aerosol generating device 100, and the second portion may be exposed to the outside. Alternatively, only a portion of the first portion may be inserted into the aerosol generating device 100, or the entire first portion and a portion of the second portion may be inserted into the aerosol generating device 100.

The user may puff aerosol while holding the second portion by the mouth of the user. In this case, the aerosol is generated by the external air passing through the first portion, and the generated aerosol passes through the second portion and is delivered to the user's mouth. For example, the external air may flow into at least one air passage formed in the aerosol generating device 100. For example, opening and closing of the air passage and/or a size of the air passage formed in the aerosol generating device 100 may be adjusted by the user.

Accordingly, the amount and the quality of smoking may be adjusted by the user. As another example, the external air may flow into the aerosol generating article 200 through at least one hole formed in a surface of the aerosol generating article 200. With respect to the terms used to describe in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, a term which is not commonly used can be selected. In such a case, the meaning of the term will be described in detail at the corresponding portion in the description of the present disclosure.

Hereinafter, the examples of the aerosol generating article 200 will be described with reference to FIG. 4.

FIG. 4 illustrates examples of the aerosol generating article.

Referring to FIG. 4, the aerosol generating article 200 may include a tobacco rod 210 and a filter rod 220. The first portion described above with reference to FIGS. 1 through 3 may include the tobacco rod 210, and the second portion may include the filter rod 220.

FIG. 4 illustrates that the filter rod 220 includes a single segment. However, the filter rod 220 is not limited thereto. In other words, the filter rod 220 may include a plurality of segments. For example, the filter rod 220 may include a first segment configured to cool an aerosol and a second segment configured to filter a certain component included in the aerosol. Also, as necessary, the filter rod 220 may further include at least one segment configured to perform other functions.

The aerosol generating article 200 may be packaged using at least one wrapper 240. The wrapper 240 may have at least one hole through which external air may be introduced or internal air may be discharged. For example, the aerosol generating article 200 may be packaged by one wrapper 240. As another example, the aerosol generating article 200 may be doubly packaged by two or more wrappers 240. For example, the tobacco rod 210 may be packaged by a first wrapper 241, and the filter rod 220 may be packaged by wrappers 242, 243, 244. Also, the entire aerosol generating article 200 may be re-packaged by another single wrapper 245. When the filter rod 220 includes a plurality of segments, each segment may be packaged by wrappers 242, 243, 244.

The tobacco rod 210 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 210 may include other additives, such as flavors, a wetting agent, and/or organic acid. Also, the tobacco rod 210 may include a flavored liquid, such as menthol or a moisturizer, which is injected to the tobacco rod 210.

The tobacco rod 210 may be manufactured in various forms. For example, the tobacco rod 210 may be formed as a sheet or a strand. Also, the tobacco rod 210 may be formed as a pipe tobacco, which is formed of tiny bits cut from a tobacco sheet. Also, the tobacco rod 210 may be surrounded by a heat conductive material. For example, the heat conductive material may be, but is not limited to, a metal foil such as aluminum foil. For example, the heat conductive material surrounding the tobacco rod 210 may uniformly distribute heat transmitted to the tobacco rod 210, and thus, the heat conductivity applied to the tobacco rod may be increased and taste of the tobacco may be improved. Also, the heat conductive material surrounding the tobacco rod 210 may function as a susceptor heated by the induction heater. Here, although not illustrated in the drawings, the tobacco rod 210 may further include an additional susceptor, in addition to the heat conductive material surrounding the tobacco rod 210.

The filter rod 220 may include a cellulose acetate filter. Shapes of the filter rod 220 are not limited. For example, the filter rod 220 may include a cylinder-type rod or a tube-type rod having a hollow inside. Also, the filter rod 220 may include a recess-type rod. When the filter rod 220 includes a plurality of segments, at least one of the plurality of segments may have a different shape.

The filter rod 220 may be formed to generate flavors. For example, a flavoring liquid may be injected onto the filter rod 220, or an additional fiber coated with a flavoring liquid may be inserted into the filter rod 220.

Also, the filter rod 220 may include at least one capsule 230. Here, the capsule 230 may generate a flavor or an aerosol. For example, the capsule 230 may have a configuration in which a liquid containing a flavoring material is wrapped with a film. For example, the capsule 230 may have a spherical or cylindrical shape, but is not limited thereto.

When the filter rod 220 includes a segment configured to cool the aerosol, the cooling segment may include a polymer material or a biodegradable polymer material. For example, the cooling segment may include pure polylactic acid alone, but the material for forming the cooling segment is not limited thereto. In some embodiments, the cooling segment may include a cellulose acetate filter having a plurality of holes. However, the cooling segment is not limited to the above-described example and is not limited as long as the cooling segment cools the aerosol.

Meanwhile, although not illustrated in FIG. 4, the aerosol generating article 200 according to an embodiment may further include a front-end filter. The front-end filter may be located on one side of the tobacco rod 210 which is opposite to the filter rod 220. The front-end filter may prevent the tobacco rod 210 from being detached outwards and prevent a liquefied aerosol from flowing into the aerosol generating device 100 (FIGS. 1 to 3) from the tobacco rod 210, during smoking.

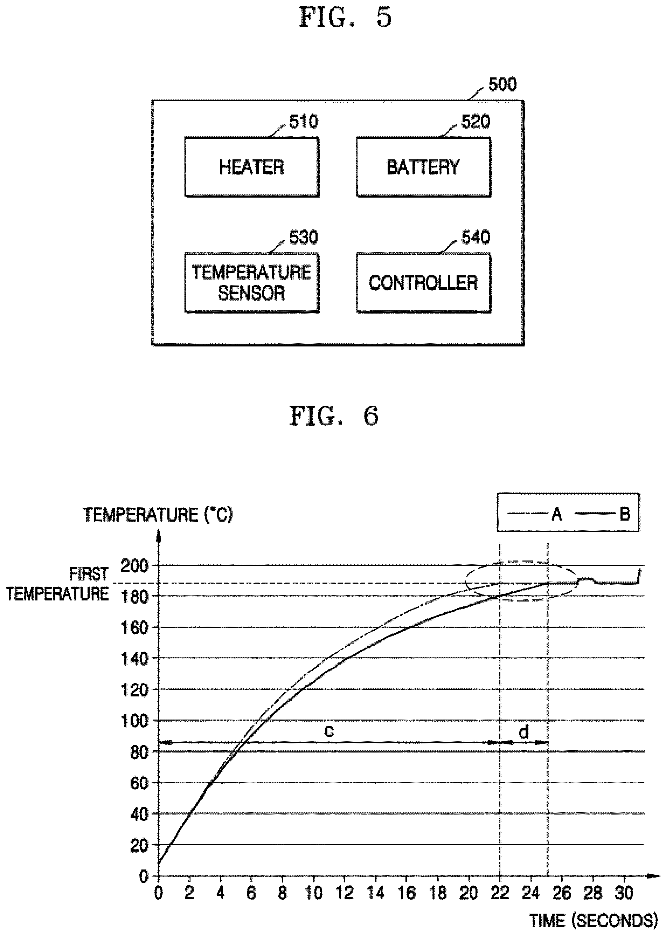

FIG. 5 is a view illustrating a configuration of an aerosol generating device according to an embodiment.

Referring to FIG. 5, the aerosol generating device 500 may include a heater 510, a battery 520, a temperature sensor 530, and a controller 540. Because the aerosol generating device 500, the heater 510, the battery 520, and the controller 540 of FIG. 5 correspond to the generating device 100, the heater 130, the battery 110, and the controller 120 of FIGS. 1 to 3, respectively, the overlapping contents are omitted.

The temperature sensor 530 may measure the temperature of the heater 510. The temperature of the heater measured by the temperature sensor may indicate the temperature of the heater measured by the temperature sensor converted into a value by using an analog digital converter (ADC).

The heater may heat the aerosol generating article at a location adjacent to or near the aerosol generating article, and heat generated from the heater may be transferred to the aerosol generating article. The temperature of the heater may be the same or similar to the temperature of the aerosol generating article.

The temperature sensor 530 may be attached to the heater 510 and measure the temperature of the heater 510. In addition, the temperature sensor 530 may not be attached to the heater 510 and may be apart from the heater 510 and measure the temperature of the heater 510. However, the arrangement of the temperature sensor 530 is not necessary limited thereto.

Because the controller 540 controls the power supplied to the heater 510 from the battery 520, the temperature of the heater 510 measured by the temperature sensor 530 may be heated to a first temperature. The first temperature may indicate a temperature set to determine whether the aerosol generating article is over-humidified. The first temperature may be less than a temperature at which preheating of the aerosol generating article is completed. For example, the temperature at which the preheating of the aerosol generating article is completed may be 245 °C, and the first temperature may be 190 °C, but are not limited thereto. Because the first temperature is less than the temperature at which the preheating of the aerosol generating article is completed, it is possible to determine whether the aerosol generating article is over-humidified before the preheating of the aerosol generating article is completed. By determining whether the aerosol generating article is over-humidified before the preheating is completed, the controller 540 may control the preheating temperature of the aerosol generating article differently depending on whether the aerosol generating article is over-humidified.

In an embodiment, the first temperature may be in a range of about 150 °C to about 240 °C. For example, the first temperature may be 190 °C, but is not limited thereto.

The controller 540 may obtain an inclination showing an amount of change in the temperature of the heater 510 measured from a point in which the measured temperature of the heater 510 is expected to reach a first temperature during a preset time period. The process of obtaining, by the controller 540, the inclination for determining whether the aerosol generating article is over-humidified is described in detail with reference to FIG. 6.

The controller 540 may determine whether the aerosol generating article is over-humidified based on the obtained inclination. The over-humidified aerosol generating article may indicate an aerosol generating article having more moisture than an aerosol generating article in a regular state. For example, when a normal aerosol generating article indicates a case in which a middle part of the normal aerosol generating article includes about 8 wt% or more and less than about 15 wt% of moisture based on a total weight of the middle part, the over-humidified aerosol generating article may indicate a case in which the middle part of the aerosol generating article includes about 15 wt% or more of moisture based on the total weight of the middle part. The medium part may indicate the tobacco rod 210 of FIG. 4.

In an embodiment, the controller 540 may determine that the aerosol generating article is over-humidified when the middle part of the aerosol generating article includes about 15 wt% or more of moisture based on the total weight of the middle part. For example, the controller 540 may determine that the aerosol generating article is over-humidified when the middle part includes about 25 wt% of moisture based on the weight of the middle part.

FIG. 6 is a graph for explaining a method of obtaining an inclination according to an embodiment.

The horizontal axis of the graph in FIG. 6 may indicate the time (seconds) when the heater is heated, and the vertical axis may indicate the temperature (°C) of the heater measured by the temperature sensor. Graph A of FIG. 6 shows the change in temperature of the aerosol generating article in a regular state according to time, and graph B shows the change in temperature of the over-humidified aerosol generating article according to time.

The over-humidified aerosol generating article may contain more moisture in the middle part than that of the aerosol generating article in a regular state. Because the specific heat of moisture is high, the over-humidified aerosol generating article may have greater heat capacity than the aerosol generating article in a regular state. When the over-humidified aerosol generating article is heated, the temperature may rise more slowly compared to when the aerosol generating article in a regular state is heated. In other words, as the heater is heated, because there is an inclination difference between the over-humidified aerosol generating article and the aerosol generating article in a regular state, whether the aerosol generating article is over-humidified may be determined based on the inclination.

According to an embodiment, the aerosol generating device may obtain an inclination showing the amount of change in the temperature of the heater with respect to time during a preset time period (d) from the time when the temperature of the heater is expected to reach the first temperature. The first temperature may change by the temperature of the heater when the heater starts to be heated. For example, when the temperature at a time in which the heater starts to be heated is 15 °C, the first temperature may be 190 °C. As another example, when the temperature at a time in which the heater starts to be heated is 30 °C, the first temperature may be 205 °C.

According to an embodiment, a time in which the temperature of the heater is expected to reach the first temperature may indicate a range within 20 to 40 seconds from the time the heater starts to be heated. For example, the predicted time may indicate a time when 22 seconds elapses from when the heater starts to be heated.

The time in which the temperature of the heater is expected to reach the first temperature may be determined in advance. The predicted time may be set based on the time when the aerosol generating article in a regular state is heated. For example, when the first temperature is set to 190 °C, the time taken for each of the aerosol generating articles in regular states to be heated to 190 °C may be measured, and an average of the measured times may be determined as the predicted time. However, the present disclosure is not limited thereto.

The preset time period d may indicate a period where there is a difference between the inclinations of the aerosol generating article and the aerosol generating article in a regular state to determine whether the aerosol generating article is over-humidified. The preset time period d may be a time period before the preheating of the aerosol generating article is completed. The length of the preset time period d may be within 5 seconds. For example, the length of the preset time period d may be 3 seconds. Because the preset time period d is formed, it is possible to clearly recognize the inclination difference and to quickly determine whether the aerosol generating article is over-humidified.

The inclination may indicate the amount of change in the temperature of the heater with respect to time during the preset time period d from the predicted time. For example, if the predicted time is 22 seconds, and the preset time period d is 2 seconds, the inclination may indicate the amount of change in the temperature of the heater with respect to time during 22 seconds to 24 seconds from the time when the heater starts to be heated.

According to an embodiment, the temperature of the heater may vary by controlling the power supplied to the heater by the pulse width modulation (PWM) control method. Because the amount of change in the temperature of the heater may be obtained by the PWM control, the inclination may be obtained.

The aerosol generating device may further include a timer for measuring the time when the heater is heated. The aerosol generating device may obtain the temperature of the heater when the time measured by the timer corresponds to the time when the temperature of the heater is expected to reach the first temperature. The timer may measure the time from when the heater starts to be heated to when the heater is heated. For example, when the predicted time is 22 seconds from the time when the heater starts to be heated, the aerosol generating device may obtain the temperature of the heater when the time measured by the timer is 22 seconds.

The aerosol generating device may obtain the temperature of the heater when the time measured by the timer corresponds to an end of the preset time period d. The end of the preset time period d may indicate a time when the preset time period elapses the predicted time. For example, when the predicted time is 22 seconds from the time when the heater starts to be heated and when the length of the preset time period d is 2 seconds, the end time may be 24 seconds from the time when the heater starts to be heated. In addition, when the time measured by the timer corresponds to 24 seconds, the aerosol generating device may obtain the temperature of the heater at 24 seconds from the time the heater starts to be heated.

The aerosol generating device may obtain an inclination based on the actual temperature of the heater at a time in which the temperature of the heater is expected to reach the first temperature, the temperature of the heater at the end of the preset time period d, and the length of the preset time period d.

According to an embodiment, the amount of change in the temperature of the heater during the preset time period d from the predicted time may indicate a difference value between the temperature of the heater at the end of the preset time period d and the temperature of the heater at the predicted time. When the aerosol generating article in a regular state is heated, the temperature of the heater may be maintained constant in the preset time period d. Because the predicted time is set based on the time when the aerosol generating article in a regular state is heated, when the aerosol generating article in a regular state is heated, the temperature of the heater may likely reach the first temperature at the predicted time. In other words, because the temperature of the heater is maintained at the first temperature during the preset time period d, the inclination may be close to 0 in the preset time period d. On the other hand, because the specific heat of the over-humidified aerosol generating article is high, the temperature of the heater may not reach the first temperature at the predicted time. When the over-humidified aerosol generating article is heated, because the temperature of the heater in the preset time period d may continuously rise, the inclination in the preset time period may be large. Therefore, whether the aerosol generating article is over-humidified may be determined based on the inclination during the preset time period d.

For example, when the aerosol generating article in a regular state is heated, the temperature of the heater in the preset time period d may be maintained at 190 °C, and the amount of change in the temperature may be 0 °C. As another example, when the over-humidified aerosol generating article is heated, the temperature of the heater may change in the preset time period d. The temperature of the heater at the predicted time point may be 180 °C, the temperature of the heater at the end time may be 190 °C, and the amount of change in the temperature may be 10 °C.

The inclination may indicate the amount of change in the temperature of the heater with respect to time during the preset time period d from the predicted time. According to an embodiment, the inclination may indicate a value of dividing the difference values between each of the temperatures of the heater at the beginning and end of the preset time period d with the length of the preset time period d. When the aerosol generating article in a regular state and the over-humidified aerosol generating article are heated in the preset time period d, there may be an inclination difference. When the aerosol generating article in a regular state is heated, the inclination of the preset time period d may be 0 or close to 0. For example, when the length of the preset time period d is 3 seconds, and when the aerosol generating article in a regular state is heated and the value of difference between the temperatures of the heater is 0 °C, the inclination of the aerosol generating article in a regular state may be 0 °C/second.

Further, when the over-humidified aerosol generating article is heated, the temperature of the heater in the preset time period d increases, and thus, an inclination may occur in the preset time period d. For example, when the length of the preset time period d is 3 seconds, and when the over-humidified aerosol generating article is heated and the value of difference between the temperatures of the heater is 10 °C, the inclination of the over-humidified aerosol generating article may be 3.33 °C/second.

When an inclination of the preset time period d is present, the size of the inclination in the preset time period d may change according to the amount of moisture included in the middle part of the over-humidified aerosol generating article. For example, when the over-humidified aerosol generating article containing moisture of 30 wt% is heated, the inclination in the preset time period d may be smaller than when the over-humidified aerosol generating article containing moisture of 25 wt% is heated. For example, when the over-humidified aerosol generating article containing moisture of 0 wt% is heated, the inclination in the preset time period d may be greater than when the over-humidified aerosol generating article containing moisture of 9 wt% is heated.

Because there is a difference between the inclinations of the aerosol generated article in a regular state and the over-humidified aerosol generating article in the preset time period d, the aerosol generating device may determine whether the aerosol generating article is in an over-humidified state based on the inclination.

In the above-described embodiments, numerical values such as 3 seconds or 190 °C are only examples, and the present disclosure is not limited thereto, and the numerical values may be changed to any appropriate value.

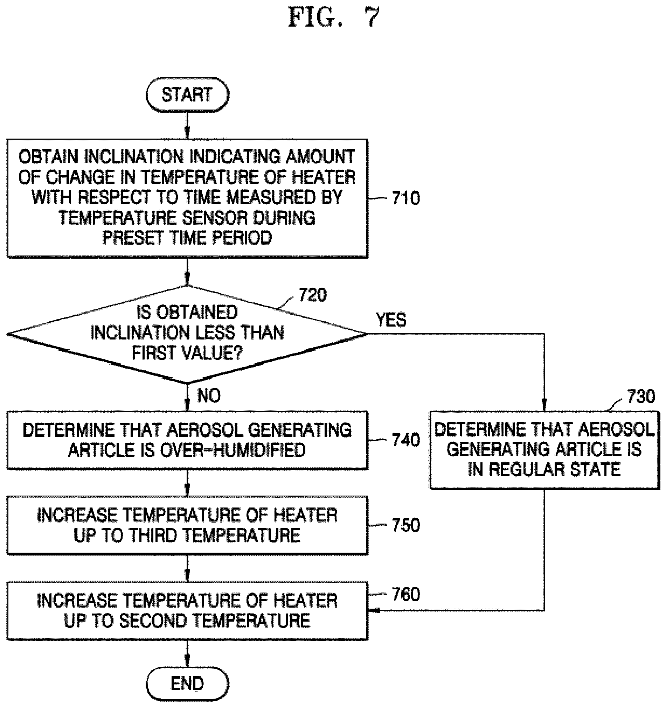

FIG. 7 is a flowchart for explaining a method of determining whether the aerosol generating article according to an embodiment is over-humidified.

The aerosol generating device may obtain an inclination indicating the amount of change in the temperature of the heater with respect to time during a preset time period from the temperature sensor (operation 710).

The aerosol generating device may determine whether the obtained inclination is less than a first value (operation 720). According to an embodiment, the first value may be in a range of about 0.2 °C/ second to about 1 °C/ second. For example, the first value may be 0.33 °C/ second. Because the first value is within a range of about 0.2 °C/ second to about 1 °C/ second, an error of differentiating between the states of the aerosol generating articles into over-humidified and regular states may be heated.

The aerosol generating device may determine that the aerosol generating article is in a regular state when the obtained inclination is less than the first value, (operation 730), and may determine that the aerosol generating article is in an over-humidified state when the obtained inclination is greater than or equal to the first value (operation 740). For example, when the first value is 0.33 °C/ second, and the obtained inclination is 0 °C/ second, the aerosol generating device may determine that the aerosol generating article is in a regular state. As another example, when the first value is 0.5 °C/ second, and the obtained inclination is 0 °C/ second, the aerosol generating device may determine that the aerosol generating article is in a regular state.

When the aerosol generating device determines that the aerosol generating article is in a regular state, the aerosol generating device may increase the temperature of the heater to reach a second temperature greater than the first temperature (operation 760). The second temperature, which is reached when preheating is completed, may indicate a temperature for preheating the aerosol generating article by the heater such that sufficient aerosols are generated from the aerosol generating article. The second temperature may be in a range of about 241 °C to about 270 °C. For example, the second temperature may be 248 °C, but is not limited thereto.

When the aerosol generating device determines that the aerosol generating article is over-humidified, to change the aerosol generating article to a regular state, the temperature of the heater may be heated to a third temperature less than the first temperature (step 750) . When the over-humidified aerosol generating article is heated according to a general temperature profile (e.g., heating the heater to reach the second temperature), the temperature at which the preheating of the aerosol generating article is completed may be high, and thus, an excessive amount of aerosols and high-temperature aerosols may be delivered to the user.

When the over-humidified aerosol generating article is heated according to a low temperature profile (e.g., heating the heater to reach the third temperature), the temperature at which the preheating of the aerosol generating article is completed may be appropriate, and thus, an appropriate amount of aerosols and aerosols with appropriate temperature may be delivered to the user. In other words, when the over-humidified aerosol generating article is heated according to a low temperature profile, the amount and temperature of aerosols may be less than when the over-humidified aerosol generating article is heated according to a general temperature profile. In addition, when the over-humidified aerosol generating article is heated according to the low temperature profile, the moisture of the middle part of the over-humidified aerosol generating article may be vaporized and thereby change the aerosol generating article to a state similar to a regular state.

The third temperature may be in a range of about 150 °C to about 200 °C. For example, the third temperature may be 160 °C, but is not limited thereto.

By heating the heater such that the temperature of the heater reaches the third temperature, the aerosol generating article may be changed from an over-humidified state to a regular state. Accordingly, the user may feel a smoking sense similar to that provided from the aerosol generating article in a regular state and the aerosol generating article may be prevented from not being used.

The aerosol generating device may have a display capable of outputting visual information, and when it is determined that the aerosol generating article is over-humidified, may output a notification indicating a state corresponding to the over-humidified state through the display. Further, when the aerosol generating article is considered to be in a regular state, the aerosol generating device may output a notification indicating a state corresponding to the regular state through the display.

When the aerosol generating device determines that the aerosol generating article is over-humidified, the aerosol generating device may increase the temperature of the heater for a preset time to reach the third temperature (operation 750). For example, when the aerosol generating device determines that the aerosol generating article is over-humidified, the heater may be heated for 1 minute to 160 °C. However, embodiments of the disclosure are not necessarily limited thereto, and the aerosol generating device may stop the heating operation of the heater when it determines that the aerosol generating article is over-humidified.

When the aerosol generating device determines that the aerosol generating article is over-humidified (operation 740), after the heater is heated to the third temperature (operation 750), the heater is heated to the second temperature (operation 760). For example, when the aerosol generating article is over-humidified, the aerosol generating device may increase the temperature of the heater to reach 248 °C after the temperature of the heater reaches 160 °C.

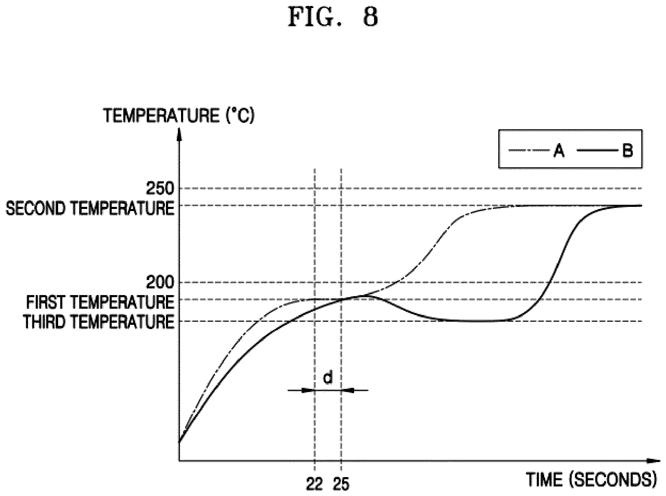

FIG. 8 is a graph showing a temperature to which a heater is heated according to the over-humidified state of the aerosol generating article according to an embodiment.

The horizontal axis of the graph in FIG. 8 may indicate the time (seconds) when the heater is heated, and the vertical axis may indicate the temperature (°C) of the heater measured by the temperature sensor. Graph A of FIG. 8 shows the change in temperature of the aerosol generating article in a regular state according to time, and graph B shows the change in temperature of the over-humidified aerosol generating article according to time.

The aerosol generating device may determine whether the aerosol generating article over-humidified in the preset time period d. For example, when the first value is 0.2 °C/ second, and the inclination in the preset time period d is 0 °C/ second, because the inclination is less than the first value, the aerosol generating device may determine that the aerosol generating article is in a regular state. As another example, when the first value is 0.2 °C/ second, and the inclination in the preset time period d is 4 °C/ second, because the inclination is greater than or equal to than the first value, the aerosol generating device may determine that the aerosol generating article over-humidified.

When the aerosol generating device determines that the aerosol generating article is in a regular state, the aerosol generating device may increase the temperature of the heater to reach the second temperature (operation 760). When the aerosol generating device determines that the aerosol generating article is over-humidified, after the heater is heated to the third temperature, the heater may be heated to the second temperature.

The aerosol generating device may prevent the user from inhaling high-temperature aerosols by heating the aerosol generating article differently according to whether the aerosol generating article is over-humidified. Further, as the over-humidified aerosol generating article becomes similar to the aerosol generating article in a regular state, it may be possible to prevent the user from abandoning the over-humidified aerosol generating article without using it.

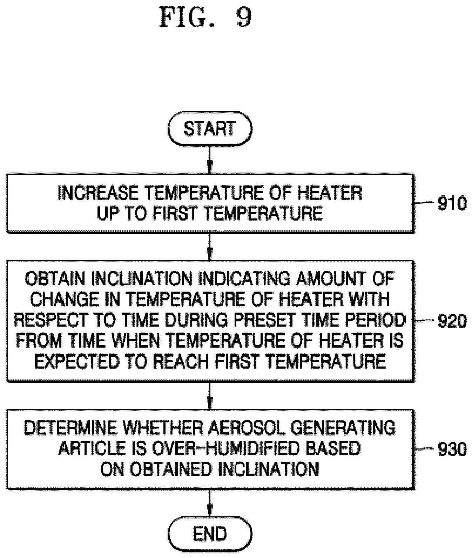

FIG. 9 is a flowchart of a method of operating an aerosol generating device according to an embodiment.

Because the details of the operation of the aerosol generating device relate to the embodiments described with relevance to FIGS. 1 to 8, although omitted below, the descriptions in FIGS. 1 to 8 may also be applied to the method of FIG. 9.

Referring to FIG. 9, in operation 910, the aerosol generating device may increase the temperature of the heater to reach the first temperature.

In operation 920, the aerosol generating device may obtain an inclination showing the amount of change in the temperature of the heater with respect to time during a preset time period (d) from the time when the temperature of the heater is expected to reach the first temperature. When the aerosol generating article in a regular state is inserted into the aerosol generating device and heated, the inclination may be close to 0 because the temperature of the heater in the preset time period is maintained at the first temperature. When the over-humidified aerosol generating article is inserted into the aerosol generating device and heated, the inclination may be greater than 0 because the temperature of the heater in the preset time period may continuously rise to reach the first temperature.

In operation 930, the aerosol generating device may determine whether the aerosol generating article is over-humidified based on the obtained inclination. Because the inclination in the preset time period changes according to whether the aerosol generating article is over-humidified, whether the aerosol generating article is over-humidified may be determined.

One embodiment may also be implemented in the form of a computer-readable recording medium including instructions executable by a computer, such as a program module executable by the computer. The computer-readable recording medium may be any available medium that can be accessed by a computer and includes both volatile and nonvolatile media, and removable and non-removable media. In addition, the computer-readable recording medium may include both a computer storage medium and a communication medium. The computer storage medium includes all of volatile and nonvolatile, and removable and non-removable media implemented by any method or technology for storage of information such as computer-readable instructions, data structures, program modules, or other data. The communication medium typically includes computer-readable instructions, data structures, other data in modulated data signals such as program modules, or other transmission mechanisms, and includes any information transfer media.

## Claims

1. An aerosol generating device (100) comprising:
a heater (130) configured to heat an aerosol generating article (200) to generate an aerosol;
a battery (110) configured to supply power to the heater (130);
a temperature sensor (530) configured to measure a temperature of the heater (130); and
a controller (120) configured to control power supplied to the heater (130) from the battery (110) to: increase a temperature of the heater (130) to reach a first temperature; obtain an inclination indicating an amount of change in the temperature of the heater (130) with respect to time during a preset time period from a time when the temperature of the heater (130) is expected to reach the first temperature; and determine whether the aerosol generating article (200) is over-humidified based on the obtained inclination.

2. The aerosol generating device of claim 1, wherein the controller (120) is further configured to
determine that the aerosol generating article (200) is in a regular state when the obtained inclination is less than a first value, and
determine that the aerosol generating article (200) is over-humidified when the obtained inclination is greater than or equal to the first value.

3. The aerosol generating device of claim 2, wherein the controller (120) is further configured to determine that the aerosol generating article (200) is over-humidified when a middle part included in the aerosol generating article (200) includes 15 wt% or more of moisture based on the weight of the middle part.

4. The aerosol generating device of claim 2, wherein, when it is determined that the aerosol generating article (200) is in a regular state, the controller (120) is further configured to increase the temperature of the heater (130) to a second temperature greater than the first temperature.

5. The aerosol generating device of claim 2, wherein, when it is determined that the aerosol generating article (200) is over-humidified, the temperature of the heater (130) is heated to a third temperature less than the first temperature to change the aerosol generating article (200) to a regular state.

6. The aerosol generating device of claim 5, wherein, after the temperature of the heater (130) is heated to the third temperature, the controller (120) is further configured to increase the temperature of the heater (130) to a second temperature greater than the first temperature.

7. The aerosol generating device of claim 1, wherein a time when the temperature of the heater (130) is expected to reach the first temperature is within a range of 20 seconds to 40 seconds from a time when the heater (130) starts to be heated.

8. The aerosol generating device of claim 1, wherein the controller (120)
further comprises a timer configured to measure a time when the heater (130) is heated, and
is further configured to obtain the temperature of the heater (130) when the time measured by the timer corresponds to the time when the temperature of the heater (130) is expected to reach the first temperature.

9. The aerosol generating device of claim 8, wherein the controller (120) is further configured to
Obtain the temperature of the heater (130) when the time measured by the timer corresponds to the end of the preset time period, and
obtain the inclination based on the temperature of the heater (130) when the temperature of the heater (130) is expected to reach the first temperature, the temperature of the heater (130) at the end of the preset time period, and a length of the preset time period.

10. The aerosol generating device of claim 2, wherein the first value is in a range of 0.2 °C/ second to 1 °C/ second.

11. The aerosol generating device of claim 1, wherein the first temperature is a range of 150 °C to 240 °C.

12. The aerosol generating device of claim 4, wherein the second temperature is in a range of 241 °C to 270 °C.

13. The aerosol generating device of claim 5, wherein, the third temperature is in a range of 150 °C to 200 °C.

## Patentansprüche

1. Aerosolerzeugungsvorrichtung (100), die Folgendes umfasst:
eine Heizvorrichtung (130), die konfiguriert ist, einen Aerosolerzeugungsartikel (200) zum Erzeugen eines Aerosols zu erhitzen;
eine Batterie (110), die konfiguriert ist, der Heizvorrichtung (130) Leistung zuzuführen;
einen Temperatursensor (530), der konfiguriert ist, die Temperatur der Heizvorrichtung (130) zu messen; und
eine Steuereinheit (120), die konfiguriert ist, Leistung, die der Heizvorrichtung (130) von der Batterie (110) zugeführt wird, zu steuern, um: die Temperatur der Heizvorrichtung (130) zu erhöhen, um eine erste Temperatur zu erreichen; eine Steigung zu erhalten, die einen Änderungsbetrag der Temperatur der Heizvorrichtung (130) in Bezug auf die Zeit während einer zuvor eingestellten Zeitspanne ab einem Zeitpunkt, zu dem erwartet wird, dass die Temperatur der Heizvorrichtung (130) die erste Temperatur erreicht, angibt; und um auf der Basis der erhaltenen Steigung festzustellen, ob der Aerosolerzeugungsartikel (200) zu stark befeuchtet ist.

2. Aerosolerzeugungsvorrichtung nach Anspruch 1, wobei die Steuereinheit (120) ferner konfiguriert ist zum:
Feststellen, dass der Aerosolerzeugungsartikel (200) in einem regulären Zustand ist, wenn die erhaltene Steigung kleiner als ein erster Wert ist, und
Feststellen, dass der Aerosolerzeugungsartikel (200) zu stark befeuchtet ist, wenn die erhaltene Steigung gleich dem ersten Wert oder größer ist.

3. Aerosolerzeugungsvorrichtung nach Anspruch 2, wobei die Steuereinheit (120) ferner konfiguriert ist, festzustellen, dass der Aerosolerzeugungsartikel (200) zu stark befeuchtet ist, wenn ein Mittelteil, das im Aerosolerzeugungsartikel (200) enthalten ist, 15 Gew.-% oder mehr Feuchtigkeit auf der Basis des Gewichts des Mittelteils enthält.

4. Aerosolerzeugungsvorrichtung nach Anspruch 2, wobei dann, wenn festgestellt wird, dass sich der Aerosolerzeugungsartikel (200) in einem regulären Zustand befindet, die Steuereinheit (120) ferner konfiguriert ist, die Temperatur der Heizvorrichtung (130) auf eine zweite Temperatur zu erhöhen, die höher als die erste Temperatur ist.

5. Aerosolerzeugungsvorrichtung nach Anspruch 2, wobei dann, wenn festgestellt wird, dass der Aerosolerzeugungsartikel (200) zu stark befeuchtet ist, die Temperatur der Heizvorrichtung (130) auf eine dritte Temperatur erhöht wird, die niedriger als die erste Temperatur ist, um den Aerosolerzeugungsartikel (200) in einen regulären Zustand zu überführen.

6. Aerosolerzeugungsvorrichtung nach Anspruch 5, wobei dann, wenn die Temperatur der Heizvorrichtung (130) auf die dritte Temperatur erhöht worden ist, die Steuereinheit (120) ferner konfiguriert ist, die Temperatur der Heizvorrichtung (130) auf eine zweite Temperatur zu erhöhen, die höher als die erste Temperatur ist.

7. Aerosolerzeugungsvorrichtung nach Anspruch 1, wobei ein Zeitpunkt, zu dem erwartet wird, dass die Temperatur der Heizvorrichtung (130) die erste Temperatur erreicht, innerhalb eines Bereichs von 20 Sekunden bis 40 Sekunden ab einem Zeitpunkt liegt, zu dem mit dem Heizen der Heizvorrichtung (130) begonnen wurde.

8. Aerosolerzeugungsvorrichtung nach Anspruch 1, wobei die Steuereinheit (120)
ferner eine Zeitmessvorrichtung umfasst, die konfiguriert ist, die Zeit zu messen, wenn die Heizvorrichtung (130) geheizt wird, und
ferner konfiguriert ist, die Temperatur der Heizvorrichtung (130) zu erhalten, wenn die Zeit, die durch die Zeitmessvorrichtung gemessen wird, dem Zeitpunkt entspricht, zu dem erwartet wird, dass die Temperatur der Heizvorrichtung (130) die erste Temperatur erreicht.

9. Aerosolerzeugungsvorrichtung nach Anspruch 8, wobei die Steuereinheit (120) ferner konfiguriert ist zum:
Erhalten der Temperatur der Heizvorrichtung (130), wenn die Zeit, die durch die Zeitmessvorrichtung gemessen wird, dem Ende der zuvor eingestellten Zeitspanne entspricht, und
Erhalten der Steigung auf der Basis der Temperatur der Heizvorrichtung (130), wenn erwartet wird, dass die Temperatur der Heizvorrichtung (130) die erste Temperatur erreicht, der Temperatur der Heizvorrichtung (130) am Ende der zuvor eingestellten Zeitspanne und einer Länge der zuvor eingestellten Zeitspanne.

10. Aerosolerzeugungsvorrichtung nach Anspruch 2, wobei der erste Wert in einem Bereich von 0,2 °C/Sekunde bis 1 °C/Sekunde liegt.

11. Aerosolerzeugungsvorrichtung nach Anspruch 1, wobei die erste Temperatur in einem Bereich von 150 °C bis 240 °C liegt.

12. Aerosolerzeugungsvorrichtung nach Anspruch 4, wobei die zweite Temperatur in einem Bereich von 241 °C bis 270 °C liegt.

13. Aerosolerzeugungsvorrichtung nach Anspruch 5, wobei die dritte Temperatur in einem Bereich von 150 °C bis 200 °C liegt.

## Revendications

1. Dispositif de production d'aérosol (100) comportant :
un élément chauffant (130) configuré pour chauffer un article de production d'aérosol (200) pour produire un aérosol ;
une batterie (110) configurée pour fournir de l'énergie à l'élément chauffant (130) ;
un capteur de température (530) configuré pour mesurer une température de l'élément chauffant (130) ; et
une commande (120) configurée pour commander l'énergie fournie à l'élément chauffant (130) à partir de la batterie (110) pour : augmenter une température de l'élément chauffant (130) de manière à atteindre une première température ; obtenir une inclinaison indiquant une quantité de variation de température de l'élément chauffant (130) par rapport au temps pendant une période de temps prédéfinie à partir d'un instant où la température de l'élément chauffant (130) est supposée atteindre la première température ; et déterminer si l'article de production d'aérosol (200) présente une humidité excessive, sur la base de l'inclinaison obtenue.

2. Dispositif de production d'aérosol selon la revendication 1, dans lequel la commande (120) est en outre configurée pour :
déterminer que l'article de production d'aérosol (200) est dans un état normal lorsque l'inclinaison obtenue est inférieure à une première valeur, et
déterminer que l'article de production d'aérosol (200) présente une humidité excessive lorsque l'inclinaison obtenue est supérieure ou égale à la première valeur.

3. Dispositif de production d'aérosol selon la revendication 2, dans lequel la commande (120) est en outre configurée pour déterminer que l'article de production d'aérosol (200) présente une humidité excessive lorsqu'une partie centrale incluse dans l'article de production d'aérosol (200) comprend 15 % en poids ou plus d'humidité sur la base du poids de la partie centrale.

4. Dispositif de production d'aérosol selon la revendication 2, dans lequel, lorsqu'il est déterminé que l'article de production d'aérosol (200) est dans un état normal, la commande (120) est en outre configurée pour augmenter la température de l'élément chauffant (130) jusqu'à une deuxième température supérieure à la première température.

5. Dispositif de production d'aérosol selon la revendication 2, dans lequel, lorsqu'il est déterminé que l'article de production d'aérosol (200) présente une humidité excessive, la température de l'élément chauffant (130) est chauffée jusqu'à une troisième température inférieure à la première température pour faire passer l'article de production d'aérosol (200) à un état normal.

6. Dispositif de production d'aérosol selon la revendication 5, dans lequel, après que la température de l'élément chauffant (130) a été chauffée jusqu'à la troisième température, la commande (120) est en outre configurée pour augmenter la température de l'élément chauffant (130) jusqu'à une deuxième température supérieure à la première température.

7. Dispositif de production d'aérosol selon la revendication 1, dans lequel un temps pendant lequel la température de l'élément chauffant (130) est supposée atteindre la première température est dans les limites d'une plage de 20 secondes à 40 secondes à compter d'un instant où le chauffage de l'élément chauffant (130) débute.

8. Dispositif de production d'aérosol selon la revendication 1, dans lequel la commande (120)
comporte en outre une minuterie configurée pour mesurer un temps pendant lequel l'élément chauffant (130) est chauffé, et
est en outre configurée pour obtenir la température de l'élément chauffant (130) lorsque le temps mesuré par la minuterie correspond au temps pendant lequel la température de l'élément chauffant (130) est supposée atteindre la première température.

9. Dispositif de production d'aérosol selon la revendication 8, dans lequel la commande (120) est en outre configurée pour
obtenir la température de l'élément chauffant (130) lorsque le temps mesuré par la minuterie correspond à la fin de la période de temps prédéfinie, et
obtenir l'inclinaison sur la base de la température de l'élément chauffant (130) lorsque la température de l'élément chauffant (130) est supposée atteindre la première température, la température de l'élément chauffant (130) à la fin de la période de temps prédéfinie, et une longueur de la période de temps prédéfinie.

10. Dispositif de production d'aérosol selon la revendication 2, dans lequel la première valeur est dans une plage de 0,2 °C/seconde à 1 °C/seconde.

11. Dispositif de production d'aérosol selon la revendication 1, dans lequel la première température est une plage de 150 °C à 240 °C.

12. Dispositif de production d'aérosol selon la revendication 4, dans lequel la deuxième température est dans une plage de 241 °C à 270 °C.

13. Dispositif de production d'aérosol selon la revendication 5, dans lequel la troisième température est dans une plage de 150 °C à 200 °C.
